# EUROPÄISCHE PATENTANMELDUNG

(11) **EP 1 213 074 A2**
(43) Veröffentlichungstag der Anmeldung: **12.06.2002**
(21) Anmeldenummer: 01810602.1
(22) Anmeldetag: 20.06.2001
(51) Int. Cl.: B23B 51/02

(54) **Bohrer für Gestein**

(30) Priorität: 30.06.2000 DE 10031968
(71) Anmelder: HILTI Aktiengesellschaft, 9494 Schaan (LI)
(72) Erfinder: Miescher, Stefan, 9492 Eschen (LI); Fritz, Mark, 6841 Mäder (AT)
(74) Vertreter: Wildi, Roland

(57) **Zusammenfassung**

Ein Bohrer (1) für Gestein mit einem mit Schneiden (6) aus Hartstoff ausgebildeten Bohrkopf (5) und einem Schaft (3) mit wenigstens einem, eine wendelförmige Wendelnut (2) ausbildenden, Wendelgang (7), wobei das je axialer Wendelnutlänge bezogene freie Volumen der Wendelnut (2) am jeweils axial dem Bohrkopf (5) abgewandten Bereich des Bohrers (1) grösser ist. Vorteilhaft ist der Bohrer (1) zur Direktmontage von beim Bohren durchdrungenen Rohrelementen ausgestaltet.

## Beschreibung

Die Erfindung bezeichnet einen Bohrer, zweckentsprechend verwendet mit einem zumindest teilweise drehenden und schlagenden Handwerkzeuggerät zum Bohren von Gestein wie Beton und Ziegel, welcher vorteilhaft zur Direktmontage von Rohrelementen ausgebildet ist.

Üblicherweise weist ein Bohrer für Gestein beidseitig zu einem, länglichen mit wendelförmigen Wendelnuten versehenen, Schaft einen Aufnahmebereich für die Verbindung mit dem Handwerkzeuggerät und einen mit Hartstoffeinsätzen versehenen Bohrkopf auf. Die Wendelnut wird entsprechend der Wendelganghöhe und des Wendelquerschnitts innerhalb des Kerndurchmessers des Schaftes und dem Aussendurchmesser des Bohrers ausgebildet.

Aus der Druckschrift DE19720589A1 ist ein System für die Befestigung von weichem Plattenmaterial, wie Isolierplatten, in einem, aus einzelnen Ziegeln bestehenden, Untergrund bekannt. Dabei wird das Plattenmaterial mittels eines, in ein gebohrtes Montageloch eingebrachten, Rohrelements am Untergrund befestigt. Der zur Erstellung dieses Montageloches verwendete Bohrer weist einen mit wendelförmigen Wendelnuten versehenen Schaft und eine axial versetzte Führungsspitze auf, welche durch ihre exzentrische Führung des Bohrkopfes im Führungsloch mit einer radial äusseren Schneide des Bohrkopfes ein bezüglich des Bohrkopfdurchmessers grösseres Montageloch bohrt. Somit ist der Bohrer selbst bezüglich seines mit wendelförmigen Wendelnuten versehenen Schaftes und des Bohrkopfes durch das Rohrelement durchführbar, wodurch dieses beim Bohrvorgang direkt montierbar ist.

Problematisch bei derartigen Bohrern ist der Abtransport des als Bohrmehl anfallenden, beim Bohren abrasiv abgetragenen, Materials durch das Rohrelement hindurch. Durch den eng begrenzten Zwischenraum zwischen dem Schaft und dem Innendurchmesser des Rohrelements steht nur wenig Freiraum zum Abtransport des abgetragenen Materials zur Verfügung, wodurch es gelegentlich zu einem Bohrmehlstau innerhalb des Rohrelements und letztendlich zu einem Festfressen des Bohrers in diesem kommt. Ein derartiger Bohrmehlstau führt zu einem höheren Reibmoment und somit durch den Drehzahlabfall zu höheren Direktmontagezeiten sowie zu einem höheren Verschleiss von Bohrer und Handwerkzeuggerät.

Zudem weist ein derartiger Bohrer aus geometrischen Gründen bezüglich eines mit dem Durchmesser des Schaftes und des Bohrkopfes dem Montagebohrloch entsprechenden üblichen Gesteinsbohrers eine wesentlich geringere Drehsteifigkeit des Schaftes und eine kleinere Befestigungsfläche des Bohrkopfes für eine Hartmetallschneidplatte auf.

Es sind Bohrer mit unterschiedlichen Steigungen des Wendels vorbekannt, welche jedoch keine Bohrlöcher erzeugen, die grösser als der jeweilige Bohrerdurchmesser sind.

Aus der DE19707608A1 ist ein Bohrer zur Herstellung von konischen Bohrungen bekannt, welche für Schraubverbindungen besonders geeignet sind. Dazu weist der Bohrer einen sich bis zu einer Spitze konisch verjüngenden Schaft mit wendelförmigen Wendelnuten auf. Ein derartiger Bohrer erzeugt jedoch keine Bohrlöcher, welche grösser als der jeweilige Bohrerdurchmesser sind.

Die Aufgabe der Erfindung besteht in der Realisierung eines Bohrers für Gestein, welcher trotz der für die Direktbefestigung von Rohrelementen geometrischen Einschränkungen eine hohe Drehsteifigkeit mit einer grossen Befestigungsfläche und einem hinreichenden Abtransport des Bohrmehls kombiniert.

Die Aufgabe wird durch die unabhängigen Patentansprüche gelöst. Vorteilhafte Weiterbildungen ergeben sich aus den Unteransprüchen.

Im wesentlichen weist der Schaft einen Wendelgang auf, dessen je axialer Wendelnutlänge bezogenes freies Volumen der Wendelnut jeweils im axial vom Bohrkopf abgewandten Bereich des Bohrers grösser ist. Vorteilhaft weist ein Bohrer mit einfach herstellbarer konstanter Steigung des Wendels eine bezüglich des Kerndurchmessers sich zum Bohrkopf hin konisch verjüngende Wendelganghöhe auf.

Dieser Lösung liegt die Erkenntnis zugrunde, nach welcher ein Bohrmehlstau infolge des Dralls des Bohrmehls und somit der relativen Drehzahldifferenz zwischen Wendel und Bohrmehl entsteht. Indem sich, insbesondere am bohrkopffernen Bereich des Werkzeugs, durch den, auf das Bohrmehl vom Wendel mittels der Coulomb'schen Reibung übertragenen Drehmoments, zunehmenden Drall das geförderte Volumen an Bohrmehl verringert, kommt es zu einer zunehmenden Verdichtung des Bohrmehls, welche letztendlich zu einer Verstopfung führen kann. Im Grenzfall dreht das verdichtete Bohrmehl mit dem Schaft mit, wodurch es zu einer mit einer starken Temperaturerhöhung verbundenen weiteren Verdichtung des nachfolgenden Bohrmehls kommt, welches sich letztendlich durch eine explosionsartige Verpuffung aus dem Zwang befreit.

Beim abrasiven Materialabtrag von Gestein durch drehende oder schlagende Bewegungen besitzen die einzelnen Teilchen des Bohrmehls eine derart hohe Bewegungsenergie, dass diese mit einer maximalen Abfuhrgeschwindigkeit selbst drallfrei in einen vom Bohrkopf distanzierten Wendelanfang geschleudert werden. Somit besteht eine vorteilhafte Variante darin, den Wendelgang in Richtung des Bohrkopfes vollständig auf eine Wendelganghöhe von Null auslaufen zu lassen.

Durch die axial in Richtung vom Bohrkopf verlaufende konische Aufweitung der Wendelganghöhe wächst der Querschnitt der Wendelnut wesentlich schneller als der den Drall verursachende, durch den Schaft ausgebildete, Rand der Wendelnut. Die durch den Drall verursachte Abnahme der axialen Abfuhrgeschwindigkeit wird durch die Querschnittszunahme der Wendelnut kompensiert. Somit wirkt eine derartige konische Ausbildung des Wendels einer Verdichtung des Bohrmehls und somit einem Bohrmehlstau entgegen.

Für die Anwendung in der Direktmontage von Rohrelementen kann der um die Wendelganghöhe verminderte, durch den Innendurchmesser des Rohrelements sowie die exzentrische Bewegung um die Führungsspitze im Kopfbereich festgelegte geometrisch verfügbare, Durchmesser vorteilhaft als Kerndurchmesser ausgebildet sein.

Vorteilhaft nimmt im Bereich des Bohrkopfes der Kerndurchmesser den gesamten geometrisch verfügbaren Durchmesser ein. Dadurch wird bezüglich des Schaftes eine maximal mögliche Drehsteifigkeit erzielt und bezüglich des Bohrkopfes steht der geometrisch verfügbare Durchmesser vollständig für die Befestigung einer Hartstoffplatte bzw. einem Hartstoffvollkopf zur Verfügung. Durch die bei gegebener Belastung dadurch verringerte Beanspruchung des Bohrers erhöht sich dessen Lebensdauer.

Mit einer derartigen konstruktiven Ausgestaltung sind Bohrer für die Direktmontage von Rohrelementen realisierbar, welche auch für hartes Gestein wie Beton geeignet sind. Zudem sind längere und/oder dünnere Bohrer realisierbar.

Die bezüglich des spiegelsymmetrischen Bohrkopfes vorteilhaften zwei Wendelgänge des Bohrers mit einer Steigung um 30° sind weiter vorteilhaft nahezu rechteckig und schmal ausgeführt, wodurch sich bei einem gegebenen Aussendurchmesser und einem, bezüglich der Abfuhrmenge für das etwa doppelt grosse Bohrmehlvolumen des unter optimalen Betriebsbedingungen abgetragenen Gesteins, gegebenen Wendelnutquerschnitt ein maximaler Kerndurchmesser ausbildet.

Der Bohrkopf ist mit einer eingelassenen Hartstoffplatte bestückt oder als Hartstoffvollkopf ausgebildet und der Hartstoff vorteilhaft mit dem restlichen Bohrer hart verlötet oder reibverschweisst. Die exzentrisch zur Achse des Bohrers angeordnete Spitze geht in einen, im wesentlichen axial parallelen, Führungsbereich über, welcher den Bohrkopf in dem durch diese exzentrisch angeordnete Spitze erstellten Führungsloch führt. An diesen Führungsbereich schliesst sich im, dem exzentrischen Versatz der Führungsspitze gegenüberliegenden, Halbraum zumindest eine radial aussen angeordnete Schneide an, welche das eigentliche Montageloch erstellt. Durch die exzentrische Führung des Bohrkopfes weist dieses Montageloch einen wesentlich grösseren Durchmesser als der Bohrkopf selbst auf.

Vorteilhaft erstreckt sich die radial äussere Schneide über den angrenzenden Durchmesser des Schaftes hinaus, wodurch für das Rohrelement ein Freiraum zwischen dem Montageloch und dem an den Bohrkopf angrenzenden Bereich des Schaftes entsteht.

Weiter vorteilhaft ist die sich über den angrenzenden Durchmesser des Schaftes hinaus erstreckende radial äussere Schneide im axialen Übergangsbereich als eine axial schräge Fase ausgebildet, welche nach erfolgter Direktmontage des Rohrelementes beim Zurückziehen des Bohrers als Einlaufkante des Bohrkopfes in das Rohrelement dient.

Die Erfindung wird in einem Ausführungsbeispiel näher erläutert anhand von
- Fig. 1: einen erfindungsgemässen Bohrer für Gestein in Seitenansicht
- Fig. 2: einen Schnitt gem. der Linie II-II in Figur 1 im vergrössertem Massstab
- Fig. 2a: eine vergrösserte Detaildarstellung gem. dem Ausschnitt X in Figur 1,
- Fig. 3: einen Schnitt gem. der Linie III-III in Figur 1 im vergrösserten Massstab
- Fig. 3a: eine vergrösserte Detaildarstellung gem. dem Ausschnitt Y in Figur 1,
- Fig. 4: einen erfindungsgemässen Bohrer gem. Figur 1 in Verwendung zur Direktmontage von Rohrelementen

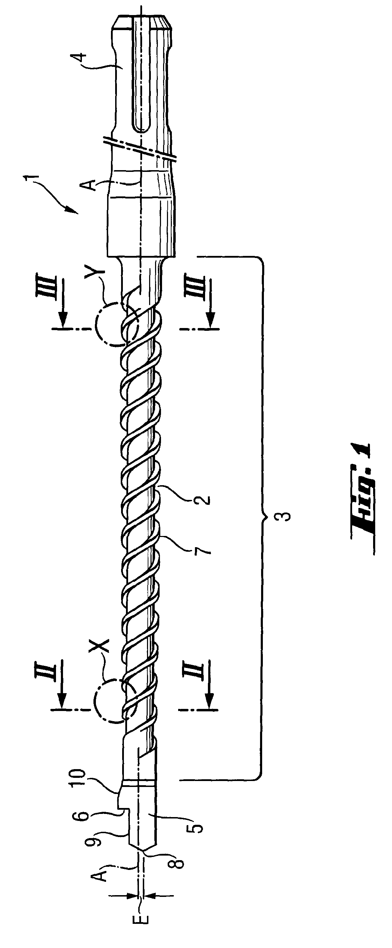

Nach Fig. 1 weist ein Bohrer 1 für Gestein beidseitig zu einem länglichen, mit wendeiförmigen Wendelnuten 2 versehenen, Schaft 3 einen Aufnahmebereich 4 für die Verbindung mit dem Handwerkzeuggerät und einen als Vollhartstoffkopf ausgebildeten Bohrkopf 5 mit einer radial äusseren Schneide 6 auf. Ein zweigängiger Wendelgang 7 mit 30° Steigung verjüngt sich axial in Richtung zum Bohrkopf 5 auf Null, wodurch sich die Wendelnuten axial nicht bis an den Bohrkopf 6 heran erstrecken. Der Bohrkopf 5 weist eine Spitze 8 auf, welche exzentrisch zur Achse A des Bohrers 1 angeordnet ist. An die Spitze 8 schliesst sich ein axial paralleler Führungsbereich 9 an. Die radial äussere Schneide 6 erstreckt sich radial über den benachbarten Bereich des Schaftes 3 hinaus und geht über eine axiale Fase 10 in diesen über.

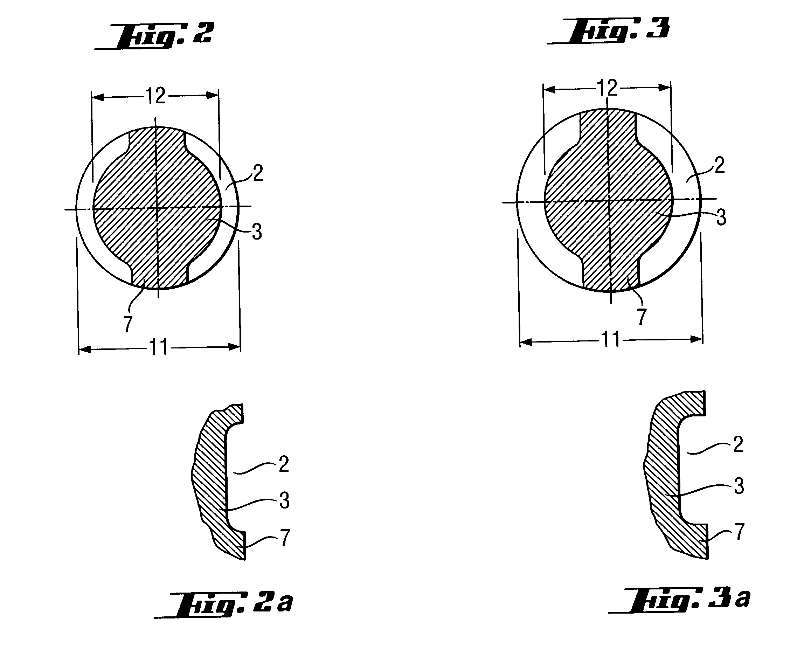

Nach Fig. 2 und Fig. 3 ist bei dem Wendelgang 7 die Wendelganghöhe als Differenz eines Aussendurchmessers 11 zu einem Kerndurchmesser 12 des Schaftes 3 gegeben, wodurch eine Wendelnut 2 ausgebildet wird. Im Schnitt II - II bzw. der Einzelheit X (Fig. 2/2a) des dem Bohrkopf benachbarten Bereiches ist die Wendelganghöhe geringer als im Schnitt III - III bzw. der Einzelheit Y (Fig. 3/3a) des vom Bohrkopf entfernten Bereiches, wobei der Kerndurchmesser 12 gleich ist. Der Wendelgang 7 bildet nach den Einzelheiten X bzw. Y (Fig. 2a/3a) im wesentlichen einen rechteckigen Querschnitt aus.

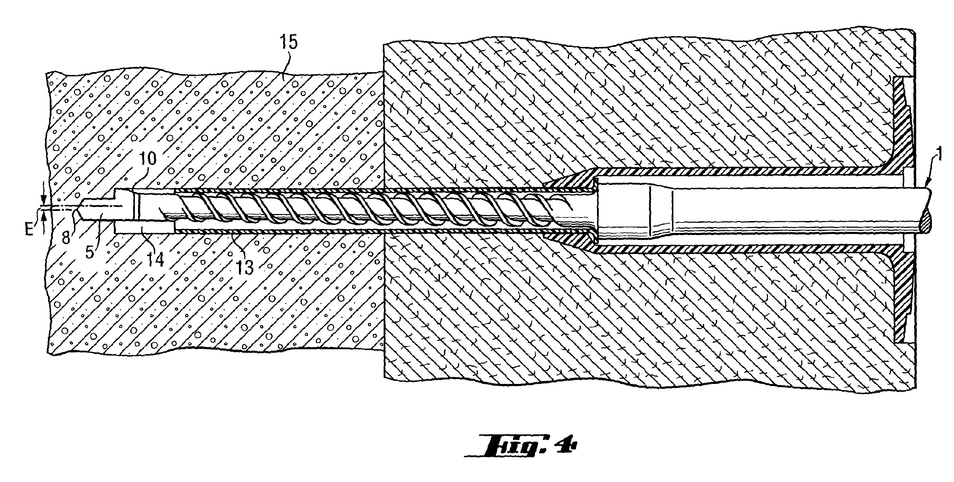

Nach Fig. 4 durchdringt ein Bohrer 1 ein mit einem Montageelement verbundenes Rohrelement 13 und ist mit diesem teilweise in einem gebohrten Montageloch 14 in einem Gestein 15 angeordnet, indem der Bohrkopf 5 mit einer Exzentrizität E der Spitze 8 in einem Führungsloch über seinen Führungsbereich geführt wird und zwischen dem Schaft des Bohrers 1 und der Innenwand des Montagelochs 14 ein Freiraum für das Rohrelement 13 vorhanden ist, welcher beim Hinausziehen des Bohrers 1 aus dem Rohrelement 13 eine Einführung des Bohrkopfes 5 in die Stirnseite des Rohrelements 13 über die Fase 10 ermöglicht.

## Patentansprüche

1. Bohrer für Gestein mit einem mit Schneiden (6) aus Hartstoff ausgebildeten Bohrkopf (5) und einem Schaft (3) mit wenigstens einem, eine wendelförmige Wendelnut (2) ausbildenden, Wendelgang (7), **dadurch gekennzeichnet, dass** das je axialer Wendelnutlänge bezogene freie Volumen der Wendelnut (2) am jeweils axial dem Bohrkopf (5) abgewandten Bereich des Bohrers (1) grösser ist.

2. Bohrer nach Anspruch 1, **dadurch gekennzeichnet, dass** ein Wendelgang (7) eine bezüglich eines Kerndurchmessers (12) sich axial zum Bohrkopf (5) hin konisch verjüngende Wendelganghöhe aufweist.

3. Bohrer nach Anspruch 1 oder Anspruch 2, **dadurch gekennzeichnet, dass** bei ansonsten im wesentlichen gleicher Form des Wendelquerschnitts die Wendelganghöhe in einem dem Bohrkopf (5) axial benachbarten Bereich des Schafts (3) reduziert ist.

4. Bohrer nach einem der vorherigen Ansprüche, **dadurch gekennzeichnet, dass** zwei Wendelgänge (7) mit einer konstanten Steigung im Bereich von 20° bis 40° ausgebildet sind.

5. Bohrer nach einem der vorherigen Ansprüche, **dadurch gekennzeichnet, dass** der Wendelnutquerschnitt im wesentlichen rechteckig ausgebildet ist.

6. Bohrer nach einem der vorherigen Ansprüche, **dadurch gekennzeichnet, dass** der Wendelgang (7) in axialer Richtung zum Bohrkopf (5) vollständig ausläuft und im an den Bohrkopf (5) angrenzenden axialen Bereich des Schafts (5) der Kerndurchmesser (12) einen gesamten geometrisch verfügbaren Aussendurchmesser (11) einnimmt.

7. Bohrer nach einem der vorherigen Ansprüche, **dadurch gekennzeichnet, dass** die radial äussere Schneide (6) des Bohrkopfes (5) über eine axiale Fase (10) in den Aussendurchmesser (11) des axial benachbarten Bereiches des Schafts (3) übergeht.

8. Bohrer nach einem der vorherigen Ansprüche, **dadurch gekennzeichnet, dass** der Bohrkopf (5) eine zur Achse des Bohrers (1) exzentrisch versetzte Spitze (8) aufweist.

9. Bohrer nach Anspruch 8, **dadurch gekennzeichnet, dass** sich an die Spitze (8) ein achsparalleler Führungsbereich (9) anschliesst.

10. Bohrer nach einem der vorherigen Ansprüche, **dadurch gekennzeichnet, dass** der Bohrer (1) zur Direktmontage von beim Bohren durchdrungenen Rohrelementen (13) verwendbar ausgestaltet ist.
